# EUROPEAN PATENT SPECIFICATION

(11) **EP 4 140 787 B1**
(45) Date of publication and mention of the grant of the patent: **08.07.2026**
(21) Application number: 21192566.4
(22) Date of filing: 23.08.2021
(51) Int. Cl.: B60H 1/00

(54) **HEATING VENTILATION AND AIR-CONDITIONING ASSEMBLY**
HEIZUNGS-, LÜFTUNGS- UND KLIMAANLAGENANORDNUNG
ENSEMBLE DE CHAUFFAGE, VENTILATION ET CLIMATISATION

(43) Date of publication of application: 01.03.2023
(73) Proprietor: Valeo Klimasysteme GmbH, 96476 Bad Rodach (DE)
(72) Inventor: GESELL, Bodo, 96476 Bad Rodach (DE); KOCH, Peter, 96476 Bad Rodach (DE); GEBAUER, Thomas, 96476 Bad Rodach (DE); HARDT, Robin, 96476 Bad Rodach (DE)
(74) Representative: Valeo Powertrain Systems

(56) References cited:
- EP-A2- 2 166 300
- WO-A1-2019/155161
- CN-A- 112 805 165
- US-A1- 2005 045 320
- US-A1- 2020 108 692

## Description

The present invention relates to a Heating Ventilation and Air-Conditioning (HVAC) assembly, preferably for a vehicle.

Generally, vehicles are provided with a heating, ventilation and air-conditioning (HVAC) system to provide conditioned air to the vehicle cabin for comfortable driving experience to passengers. The HVAC system includes a HVAC assembly having a housing to accommodate various elements for providing conditioned air the vehicle cabin. Commonly, the housing may receive an evaporator to provide cold air to the vehicle cabin and the evaporator is fluidically connected to the cooling circuit. In case the vehicle in the cool region, the passengers may require hot conditioned air in the vehicle cabin. In case the vehicle is conventional vehicle having an internal combustion engine, the housing may be provided with a heat pump (e.g., a heat exchanger) fluidically connected to the engine to provide hot coolant to the heat exchanger. In both cases, a blower may be provided in the housing to blow air onto the evaporator or the heat exchanger to provide conditioned air to the vehicle cabin. In case the vehicle is an electric vehicle, in absence of the engine, an electric heater may be provided in the housing instead of a heat pump.

The electric heater can be a positive thermal coefficient heater adapted to provide hot air to the vehicle cabin. The housing may include a frame to receive the heater and flaps to redirect the air to different parts of the vehicle cabin. Further, the inner wall of the housing, the frame, and the flaps are commonly made of plastic materials, which are prone to the higher temperature. In an example, the heaters are being operated on a higher temperature level compared to the conventional coolant - based heat exchangers, thereby exposing surrounding parts, for example heater support frames, separation walls, flaps and kinematics and specific areas of air ducts in the housing to higher temperatures, resulting in an increased risk of thermal failure of such surrounding components. Exposed parts may bend or melt, and the flaps may not close properly or becoming inoperative. To avoid such problems, the housing and other parts are made of heat resistant materials. However, such solution attracts higher manufacturing cost and bill of material increases.
WO 2019/155161 A1 describes a vehicle's HVAC installation 3 which features at least one heating element 4 within a frame 5, which includes a first face 10 for air entry and a second face 11 with air exit openings 13 and the inclusion of at least one thermal protection device 22 on the second face 11, positioned to face a partition wall 23 of the HVAC casing.

Accordingly, there is a need for a cost-effective solution to overcome the above-mentioned problems in an HVAC assembly. Further, there is another need for a heating ventilation and air-conditioning assembly having heat resistive materials to withstand high operating temperature of the heat-generating element disposed inside the assembly.

In the present description, some elements or parameters may be indexed, such as a first element and a second element. In this case, unless stated otherwise, this indexation is only meant to differentiate and name elements, which are similar but not identical. No idea of priority should be inferred from such indexation, as these terms may be switched without betraying the invention. Additionally, this indexation does not imply any order in mounting or use of the elements of the invention.

In view of forgoing, the present invention provides a heating ventilation and air-conditioning assembly as set out in independent claim 1. Preferred embodiments of the present invention are laid down in the appended dependent claims.

In one embodiment, the protection section is a coating of the second material on at least a portion of the first material of the housing.

In another embodiment, the protection section is a walled element adapted to be coupled to the at least a portion of the housing.

Further, the walled element is disposed adjacent to the heat-generating element.

In one example, the walled element is adapted to encompass the heat-generating element.

In another example, the protection section is retrofitted to an internal wall of the housing.

In yet another example, the protection section is snap-fitted to the internal wall of the housing.

Generally, the heat-generating element is an electrical heater.

Further, the heat resistance property and durability of the second material are higher than the heat resistance property and durability of the first material respectively.

Further, the first material is made of polypropylene and the second material is made by any one of a foam and a heat resistant material.

In another embodiment, the protection section is an internal housing for the flap, the frame and the separation wall.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
Fig. 1 illustrates a schematic view of a heating ventilation and air-conditioning (HVAC) assembly, according to an embodiment of the prior art;
Figs. 2 and 3 illustrate schematic views of a heating ventilation and air-conditioning (HVAC) assembly, in accordance with an embodiment of the present invention; and
Fig. 4 illustrates another schematic view of the HVAC assembly, in which a protection section is coated to a housing of Fig. 2.

It must be noted that the figures disclose the invention in a detailed enough way to be implemented, said figures helping to better define the invention if needs be. The invention should however not be limited to the embodiment disclosed in the description.

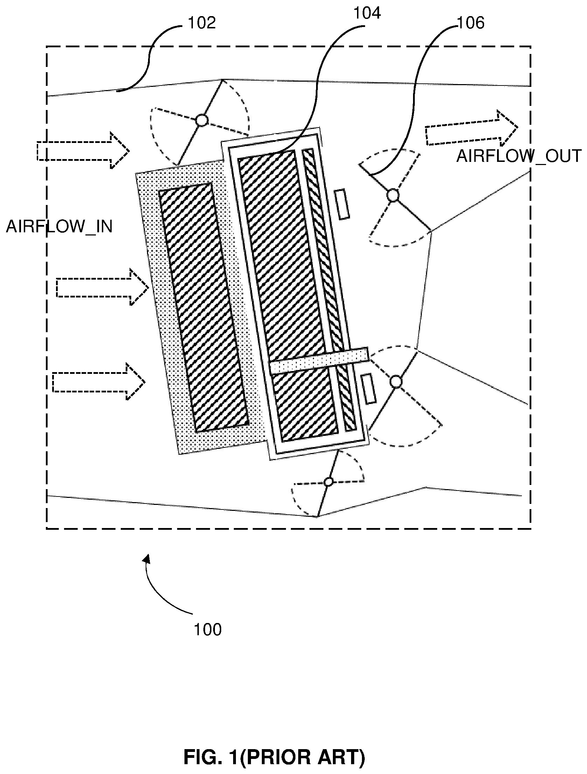

The present invention envisages a Heating Ventilation and Air-Conditioning assembly, preferably for a vehicle, hereinafter referred to as HVAC assembly. In conventional HVAC assembly, the housing has a frame to receive a heater and separation walls, where the housing and other parts are made of same materials, such as plastic, PPT-20 etc. Such parts may become damaged due to high operating temperature of the heater in the housing. Fig. 1 illustrates a schematic view of an HVAC assembly 100, according to an embodiment of the prior art. The assembly 100 includes a housing 102 to accommodate various parts or elements such as at least one heat exchanger 104 disposed in a frame 106 and flaps 108 to direct the airflow towards outlets. The housing 102 and other parts are made of a material that is prone to high temperature. To avoid such problems, the present invention is provided with a protection section provided in the housing of the HVAC assembly. Geometry and configuration of the protection sections are described with respect to the forthcoming figures.

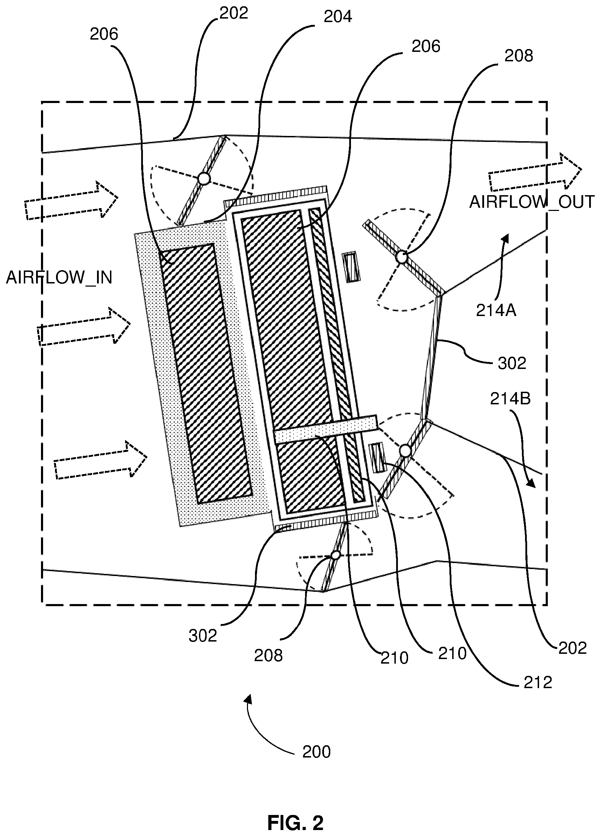

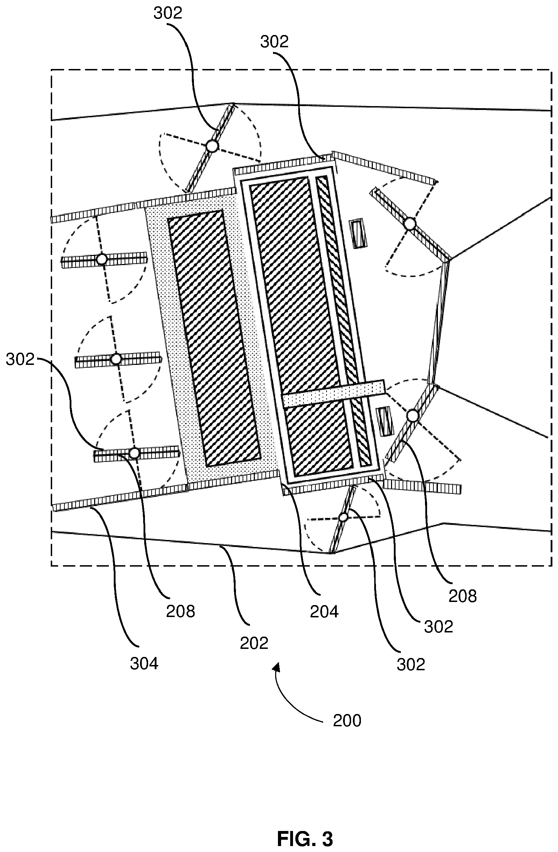

Figs. 2 and 3 illustrate schematic views of a heating ventilation and air-conditioning (HVAC) assembly 200, in accordance with an embodiment of the present invention. The HVAC assembly 200 may be provided in a heating ventilation and air-condition system of the vehicle. The HVAC assembly 200 may be disposed under a dashboard of the vehicle. The HVAC assembly 200 includes a housing 202 adapted to accommodate various elements of the HVAC assembly 200. Further, the air flowing into the housing 202 is denoted as "AIRFLOW_IN" and the air egressing from the housing 202 through vents is denoted as "AIRFLOW_OUT". The housing 202 may include at least one frame 204, at least one heat-generating element 206, flaps 208, separation walls 210, and temperature sensing elements 212. In one example, the housing 202 is made of a first material, such as polypropylene or alike.

The heat-generating element 206 is disposed within the housing 202. In other words, the housing 202 completely encapsulates the heat-generating element 206. Particularly, the frame 204 disposed in the housing 202 is adapted to receive the heat-generating element 206. The frame 204 may be firmly connected to the internal wall of the housing 202, so that the heat-generating element 206 can be firmly disposed in the housing 202. The frame 204 can firmly hold the heat-generating element 206, thereby arresting the movements of the heat-generating element 206 within the housing 202 when the air flows on the heat-generating element 206. In one example, the heat-generating element 206 can be coolant-based heat exchanger. In another example, the heat-generating element 206 can be an electrical heater, preferably, a positive thermal co-efficient (PTC) heater.

Further, the flaps 208 are provided in the housing 202 to redirect the airflow into different segments/areas in the housing 202 or to direct the airflow into required vents 214A-B defined in the housing 202. The flaps 208 may be disposed in the housing upstream or downstream to the heat-generating element 206. As shown in Fig.2, the flaps 208 are downstream to the heat-generating element 206 with respect to the airflow direction in the housing 202. In other example, the flaps 208 can be provided around the heat-generating element 206 as shown in Fig. 3. Further, the flaps 208 are adapted to allow or block the airflow flowing into the vents 214A-B formed in the housing 202.

Further, the separation walls 210 are provided in proximity to the heat-generating element 206 to create different sections of the heat-generating element 206. In one example, the separation walls 210 may be connected to the frame 204 to divert the airflow flowing from the heat-generating element 206. Further, the temperature sensing elements 212 such as sensors are provided in proximity to the heat-generating element 206. The temperature sensing elements 212 are adapted to measure temperature of the airflow around the heat-generating element 206, accordingly provide the information to a control unit of the HVAC system. As the operating temperature of the heat-generating element 206 is higher, the elements around the heat-generating element 206 such as the frame 204, the flaps 208, the separation walls 210 may prone to higher temperature, thereby such elements may damage or melt. To avoid such problems, a protection section 302 is provided in the vicinity of the heat-generating element 206 in the housing 202.

The protection section 302 is made of a second material adapted to protect at least a portion of the housing 202 from the heat generated by the heat-generating element 206. Here, the portion of the housing 202 refers to the internal wall of the housing 202 formed in the vicinity of the heat-generating element 206. The second material can be made of a foam and/or a heat resistant material.

In one embodiment, the protection section 302 is a walled element adapted to be coupled to the portion of the housing 202. Particularly, the walled element 302 is coupled to at least one of the internal wall of the housing 202, the frame 204, the flaps 208 and the temperature sensors 212. As the walled element 302 is made of a resistant material, it can protect the above-mentioned elements from the heat generated by the heat-generating element 206. Although the protection section 302 is made of the second material having heat resistance properties, adding the protection section to the elements of the housing 202 does not substantially increase weight of the elements disposed inside the housing 202.

As shown in Figs. 2 and 3, the protection section 302 is adjacent to the heat-generating element 206. Particularly, the walled element 302 is disposed on the internal wall of the housing 202 and adjacent to the heat-generating element 206. In one example, the walled element 302 encompasses the heat-generating element 206. In another example, the walled element 302 encompasses the frame 204, the flaps 208, the separation walls 210 and the temperature sensors 212 as shown in Figs. 2 and 3, so that the elements can be protected from the heat generated by the heat-generating element 206.

In one example, the protection section 302 can be an internal housing 304 for the flaps 208, the frame 204 and the separation walls 210. In other words, the protection section 302 can act an internal housing for the flaps 208, the frame 204 and the separation walls 210, as the protection section 302 encompasses the flaps 208, the frame 204 and the separation walls 210. Further, the protection section 302 being of the second material is having higher durability and heat resistance property than of the first material of the housing 202.

In another example, the protection section 302 can be retrofitted to the internal wall of the housing 202 of the HVAC assembly 200. Similarly, the protection section 302 can be retrofitted to the flaps 208, the frame 204 and the separation walls 210. In yet another example, the protection section 302 can be snap-fitted to the internal wall of the housing 202 of the HVAC assembly 200. Similarly, the protection section 302 can be snap-fitted to the flaps 208, the frame 204 and the separation walls 210.

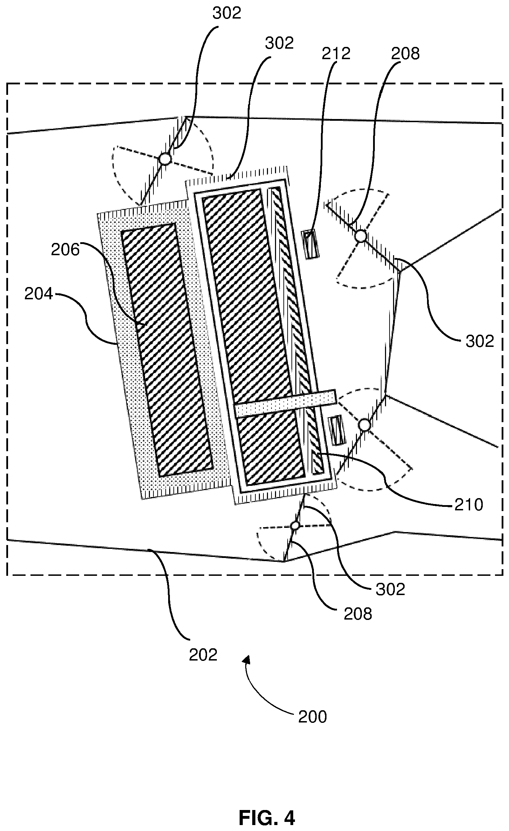

Fig. 4 illustrates another schematic view of the HVAC assembly 200, in which the protection section 302 is coated to the housing 202 of Fig. 2. The protection section 302 is applied as a coating to the internal wall of the housing 202. Also, the protection section 302 is applied to other elements such as the flaps 208, the frame 204 and the separation walls 210. In another example, the protection section 302 made of the second material is integrally formed with the housing 202. In such case, the housing 202 is manufactured in such a way that the protection section 302 lies in vicinity to the heat-generating element 206. As the protection section 302 is provided at particular places of the housing 202, rather than applying to whole the housing 202, cost of the HVAC assembly can be reduced.

Further, the protection section 302 can be applied to other elements in the housing 202 such as locking means provided to lock mobility of the heat-generating elements 206 and air duct sections provided in the housing 202 at the downstream to the heat-generating element 206. As the protection section 302 is applied in the housing 202, it can withstand higher temperature and protect from the heat generated by the heat-generating element 202. As a result, the housing 202 and other elements disposed inside housing 202 can be protected from melting and damaging by the heat. Also, the protection section 302 is applied to few portion of the housing 202, hence the cost of the HVAC assembly can be optimized and bill of materials can be reduced.

## Claims

1. A heating ventilation and air-conditioning assembly (200) with a housing (202) and at least one heat-generating element (206) disposed within the housing (202), the housing (202) being made of a first material, wherein the assembly (200) comprises: a protection section (302) in the vicinity of the heat-generating element (206) in the housing (202), the protection section (302) being made of a second material and adapted to protect at least a portion of the housing (202) from the heat generated by the heat-generating element (206), wherein the second material of the protection section (302) is made of a different material than the first material, the assembly (200) further comprising:
at least one flap (208) disposed in the housing (202) at an upstream and a downstream of the heat-generating element (206);
a frame (204) disposed in the housing (202) to receive the heat-generating element (206); and
at least one separation wall (210) disposed on the heat-generating element (206), **characterized in that** the protection section (302) is applied on the flap (208), the frame (204) and the separation wall (210) to encompass the flap (208) and the separation wall (210).

2. The heating ventilation and air-conditioning assembly (200) according to claim 1, wherein the protection section (302) is a coating of the second material on at least a portion of the first material of the housing (202).

3. The heating ventilation and air-conditioning assembly (200) according to claim 1, wherein the protection section (302) is a walled element adapted to be coupled to the at least a portion of the housing (202).

4. The heating ventilation and air-conditioning assembly (200) according to claim 3, wherein the walled element (302) is disposed adjacent to the heat-generating element (206).

5. The heating ventilation and air-conditioning assembly (200) according to claim 3, wherein the walled element is adapted to encompass the heat-generating element (206).

6. The heating ventilation and air-conditioning assembly (200) according to any of the claims 3 to 5, wherein the protection section (302) is retrofitted to an internal wall of the housing (202).

7. The heating ventilation and air-conditioning assembly (200) according to any of the claims 3 to 6, wherein the protection section (302) is snap-fitted to the internal wall of the housing (202).

8. The heating ventilation and air-conditioning assembly (200) according to any of the preceding claims, wherein the heat-generating element (206) is an electrical heater.

9. The heating ventilation and air-conditioning assembly (200) according to any of the preceding claims, wherein the heat resistance property and durability of the second material are higher than the heat resistance property and durability of the first material respectively.

10. The heating ventilation and air-conditioning assembly (200) according to any of the preceding claims, wherein the first material is made of polypropylene and the second material is made by any one of a foam and a heat resistant material.

11. The heating ventilation and air-conditioning assembly (200) according to any of the preceding claims, wherein the protection section (302) is an internal housing (304) for the flap (208), the frame (204) and the separation wall (210).

## Patentansprüche

1. Eine Heizungs-, Lüftungs- und Klimaanlagenbaugruppe (200) mit einem Gehäuse (202) und mindestens einem wärmeerzeugenden Element (206), das innerhalb des Gehäuses (202) angeordnet ist, wobei das Gehäuse (202) aus einem ersten Material besteht, wobei die Baugruppe (200) umfasst: einen Schutzabschnitt (302) in der Nähe des wärmeerzeugenden Elements (206) im Gehäuse (202), wobei der Schutzabschnitt (302) aus einem zweiten Material besteht und dazu ausgelegt ist, mindestens einen Teil des Gehäuses (202) vor der vom wärmeerzeugenden Element (206) erzeugten Wärme zu schützen, wobei das zweite Material des Schutzabschnitts (302) aus einem anderen Material als das erste Material besteht, wobei die Baugruppe (200) ferner umfasst: mindestens eine Klappe (208), die im Gehäuse (202) stromaufwärts und stromabwärts des wärmeerzeugenden Elements (206) angeordnet ist; einen Rahmen (204), der im Gehäuse (202) angeordnet ist, um das wärmeerzeugende Element (206) aufzunehmen; und mindestens eine Trennwand (210), die am wärmeerzeugenden Element (206) angeordnet ist, **dadurch gekennzeichnet, dass** der Schutzabschnitt (302) auf der Klappe (208), dem Rahmen (204) und der Trennwand (210) aufgebracht ist, um die Klappe (208) und die Trennwand (210) zu umschließen.

2. Die Heizungs-, Lüftungs- und Klimaanlagenbaugruppe (200) nach Anspruch 1, wobei der Schutzabschnitt (302) eine Beschichtung des zweiten Materials auf mindestens einem Teil des ersten Materials des Gehäuses (202) ist.

3. Die Heizungs-, Lüftungs- und Klimaanlagenbaugruppe (200) nach Anspruch 1, wobei der Schutzabschnitt (302) ein Wandelement ist, das dazu ausgelegt ist, mit mindestens einem Teil des Gehäuses (202) verbunden zu werden.

4. Die Heizungs-, Lüftungs- und Klimaanlagenbaugruppe (200) nach Anspruch 3, wobei das Wandelement (302) benachbart zum wärmeerzeugenden Element (206) angeordnet ist.

5. Die Heizungs-, Lüftungs- und Klimaanlagenbaugruppe (200) nach Anspruch 3, wobei das Wandelement dazu ausgelegt ist, das wärmeerzeugende Element (206) zu umschließen.

6. Die Heizungs-, Lüftungs- und Klimaanlagenbaugruppe (200) nach einem der Ansprüche 3 bis 5, wobei der Schutzabschnitt (302) nachträglich an einer Innenwand des Gehäuses (202) angebracht ist.

7. Die Heizungs-, Lüftungs- und Klimaanlagenbaugruppe (200) nach einem der Ansprüche 3 bis 6, wobei der Schutzabschnitt (302) durch Einrasten an der Innenwand des Gehäuses (202) befestigt ist.

8. Die Heizungs-, Lüftungs- und Klimaanlagenbaugruppe (200) nach einem der vorhergehenden Ansprüche, wobei das wärmeerzeugende Element (206) ein elektrisches Heizgerät ist.

9. Die Heizungs-, Lüftungs- und Klimaanlagenbaugruppe (200) nach einem der vorhergehenden Ansprüche, wobei die Wärmebeständigkeitseigenschaft und Haltbarkeit des zweiten Materials jeweils höher sind als die Wärmebeständigkeitseigenschaft und Haltbarkeit des ersten Materials.

10. Die Heizungs-, Lüftungs- und Klimaanlagenbaugruppe (200) nach einem der vorhergehenden Ansprüche, wobei das erste Material aus Polypropylen besteht und das zweite Material aus einem Schaum oder einem hitzebeständigen Material hergestellt ist.

11. Die Heizungs-, Lüftungs- und Klimaanlagenbaugruppe (200) nach einem der vorhergehenden Ansprüche, wobei der Schutzabschnitt (302) ein inneres Gehäuse (304) für die Klappe (208), den Rahmen (204) und die Trennwand (210) ist.

## Revendications

1. Un ensemble de chauffage, ventilation et climatisation (200) avec un boîtier (202) et au moins un élément générateur de chaleur (206) disposé à l'intérieur du boîtier (202), le boîtier (202) étant fabriqué en un premier matériau, dans lequel l'ensemble (200) comprend : une section de protection (302) au voisinage de l'élément générateur de chaleur (206) dans le boîtier (202), la section de protection (302) étant fabriquée en un second matériau et adaptée pour protéger au moins une partie du boîtier (202) de la chaleur générée par l'élément générateur de chaleur (206), dans lequel le second matériau de la section de protection (302) est fabriqué en un matériau différent du premier matériau, l'ensemble (200) comprenant en outre : au moins un volet (208) disposé dans le boîtier (202) en amont et en aval de l'élément générateur de chaleur (206) ; un cadre (204) disposé dans le boîtier (202) pour recevoir l'élément générateur de chaleur (206) ; et au moins une paroi de séparation (210) disposée sur l'élément générateur de chaleur (206), **caractérisé en ce que** la section de protection (302) est appliquée sur le volet (208), le cadre (204) et la paroi de séparation (210) pour englober le volet (208) et la paroi de séparation (210).

2. L'ensemble de chauffage, ventilation et climatisation (200) selon la revendication 1, dans lequel la section de protection (302) est un revêtement du second matériau sur au moins une partie du premier matériau du boîtier (202).

3. L'ensemble de chauffage, ventilation et climatisation (200) selon la revendication 1, dans lequel la section de protection (302) est un élément à parois adapté pour être couplé à ladite au moins une partie du boîtier (202).

4. L'ensemble de chauffage, ventilation et climatisation (200) selon la revendication 3, dans lequel l'élément à parois (302) est disposé de manière adjacente à l'élément générateur de chaleur (206).

5. L'ensemble de chauffage, ventilation et climatisation (200) selon la revendication 3, dans lequel l'élément à parois est adapté pour englober l'élément générateur de chaleur (206).

6. L'ensemble de chauffage, ventilation et climatisation (200) selon l'une quelconque des revendications 3 à 5, dans lequel la section de protection (302) est montée en rattrapage sur une paroi interne du boîtier (202).

7. L'ensemble de chauffage, ventilation et climatisation (200) selon l'une quelconque des revendications 3 à 6, dans lequel la section de protection (302) est fixée par encliquetage à la paroi interne du boîtier (202).

8. L'ensemble de chauffage, ventilation et climatisation (200) selon l'une quelconque des revendications précédentes, dans lequel l'élément générateur de chaleur (206) est un chauffage électrique.

9. L'ensemble de chauffage, ventilation et climatisation (200) selon l'une quelconque des revendications précédentes, dans lequel la propriété de résistance thermique et la durabilité du second matériau sont respectivement supérieures à la propriété de résistance thermique et à la durabilité du premier matériau.

10. L'ensemble de chauffage, ventilation et climatisation (200) selon l'une quelconque des revendications précédentes, dans lequel le premier matériau est fabriqué en polypropylène et le second matériau est fabriqué à partir de l'un quelconque d'une mousse et d'un matériau résistant à la chaleur.

11. L'ensemble de chauffage, ventilation et climatisation (200) selon l'une quelconque des revendications précédentes, dans lequel la section de protection (302) est un boîtier interne (304) pour le volet (208), le cadre (204) et la paroi de séparation (210).
